# FASCICULE DE BREVET EUROPEEN

(11) **EP 2 402 130 B1**
(45) Date de publication et mention de la délivrance du brevet: **20.05.2015**
(21) Numéro de dépôt: 11290273.9
(22) Date de dépôt: 17.06.2011
(51) Int. Cl.: B28D 1/04, B28D 7/04, B23D 47/04, E21B 25/00

(54) **Dispositif pour couper au moins une extrémité de carottes**
Vorrichtung zum Abschneiden mindestens eines Endes von Karotten
Device for cutting at least one end of a carrot

(30) Priorité: 29.06.2010 FR 1002696
(43) Date de publication de la demande: 04.01.2012
(73) Titulaire: Structure et Rehabilitation, 93170 Bagnolet (FR)
(72) Inventeur: Benslimane, Idriss, 78400 Chatou (FR)
(74) Mandataire: Flavenot, Bernard

(56) Documents cités:
- WO-A2-2008/028198
- DE-A1- 2 856 530
- JP-A- 2006 110 691
- US-A- 3 879 896
- US-A- 4 911 001
- US-B1- 7 021 688

## Description

La présente invention concerne les dispositifs pour couper au moins une extrémité de carottes en un matériau relativement dur, comme celles que l'on peut obtenir en carottant du béton ou analogue, qui se présentent sous la forme de cylindres de révolution, ces coupes ayant essentiellement pour but de réaliser des tronçons de carottes ayant des faces d'extrémité les plus planes possible et parallèles entre elles, de préférence perpendiculaires à l'axe de révolution des cylindres.

On sait que l'on est obligé, notamment pour la surveillance d'ouvrages en béton comme des barrages, des dalles, des tunnels, des bâtiments, des ponts ou analogues, de procéder, dans ces ouvrages, à des prélèvements de carottes au moyen d'un carottier bien connu en lui même (parfois désigné sous le terme "carotteuse").

Une telle carotte se présente sous la forme d'un cylindre de révolution d'une certaine longueur, mais dont les extrémités ne sont généralement ni planes (comportant même des aspérités), ni parallèles entre elles, et qui est souvent trop longue pour qu'elle puisse être soumise correctement à des tests, par exemple dans des presses, pour mesurer sa résistance à la compression afin de déterminer la qualité et la tenue dans le temps du matériau dans lequel elle a été prélevée, pour éventuellement décider s'il est nécessaire d'intervenir ou non pour la consolidation de l'ouvrage qui a été réalisé dans ce matériau.

Pour pallier cet inconvénient, on coupe la carotte en tronçons de relativement courte longueur, et surtout ayant des faces d'extrémités parallèles entre elles et les plus planes possible, de préférence perpendiculaires à son axe de révolution pour obtenir des éprouvettes qui sont aptes à être testées.

Pour réaliser ces coupes d'extrémité de carottes, on utilise une scie généralement circulaire associée à un dispositif complexe et onéreux. Tous les dispositifs de coupe de ce type qui existent actuellement ne sont en général pas satisfaisants car ils produisent beaucoup trop de déchets, notamment par le fait que, lors de la coupe de la carotte, des tronçons se cassent et/ou les extrémités s'ébrèchent.

Des dispositifs antérieurs pour couper de telles carottes sont par exemple décrits dans les DE 2856530 et US 7021688.

Aussi, la présente invention a-t-elle pour but de réaliser un dispositif pour couper au moins une extrémité de carottes en un matériau relativement dur se présentant sous la forme de cylindres de révolution, pour réaliser des faces d'extrémités planes, qui pallie les inconvénients mentionnés ci-dessus des dispositifs de coupe de carottes de l'art antérieur, tout en présentant une structure simple et donc peu onéreuse, et qui permette en outre de réaliser presque simultanément une pluralité de tronçons, ce qui, en finale, confère à ce dispositif de coupe un prix de revient très faible, en tout cas très inférieur à celui des dispositifs de coupe de carottes de l'art antérieur.

Plus précisément, la présente invention a pour objet un dispositif pour couper au moins une extrémité de carottes en un matériau relativement dur se présentant sous la forme d'un cylindre de révolution autour d'un premier axe de révolution et de rayon R, comportant les caractéristiques énoncées dans la revendication 1 annexée.

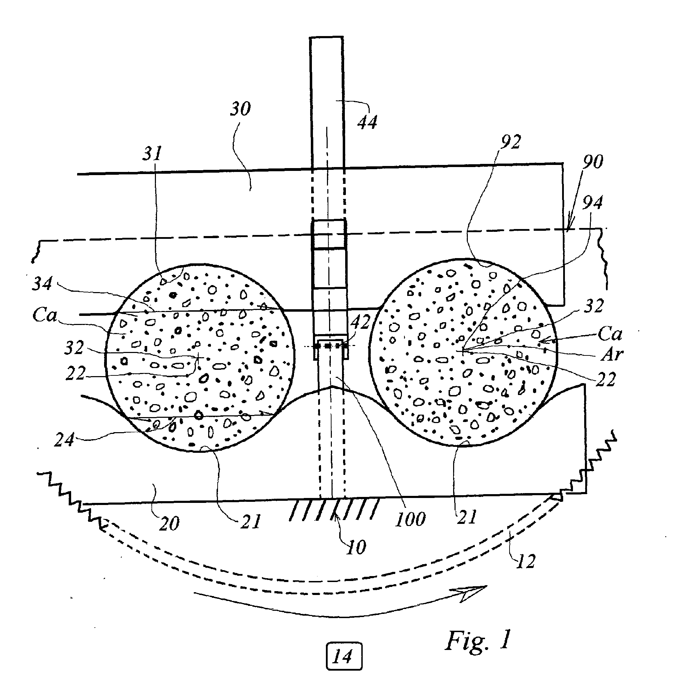

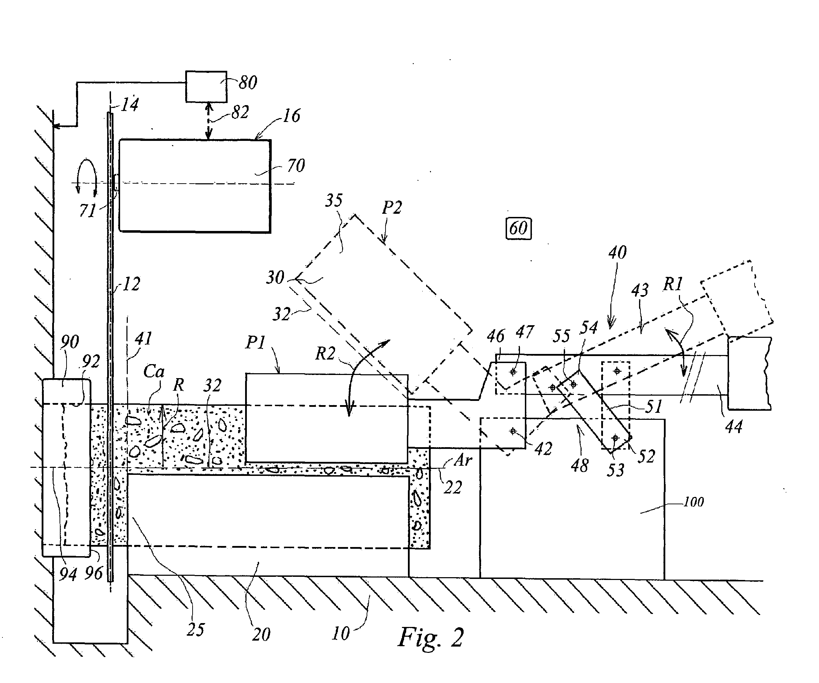

D'autres caractéristiques et avantages de la présente invention apparaîtront au cours de la description suivante donnée en regard des dessins annexés à titre illustratif mais nullement limitatif, dans lesquels : Les figures 1 et 2 représentent, sous forme schématique, un mode de réalisation du dispositif selon l'invention pour couper des carottes en un matériau relativement dur et se présentant sous la forme de cylindres de révolution, respectivement en vue de face et en vue de côté. La présente invention est relative à un dispositif pour couper au moins une extrémité de carottes Ca en un matériau relativement dur se présentant. sous la forme d'un cylindre de révolution autour d'un premier axe de révolution Ar et de rayon R, pour réaliser des tronçons de carottes ayant des faces d'extrémités planes et parallèles entre elles, ces carottes étant généralement obtenues par carottage dans des matériaux durs comme du béton dans des ouvrages d'art tels que des bâtiments, tunnels, ponts, dalles, etc.

En référence indifféremment aux deux figures, le dispositif comporte une embase 10 de tout type, par exemple une table ou analogue, une lame de scie 12, des moyens 16 pour animer cette lame de scie 12 en mouvement de coupe dans un plan de coupe 14, et des moyens pour déplacer la lame de scie par rapport à l'embase 10, en translation dans le plan de coupe 14.

Le dispositif comporte outre au moins un berceau 20 se présentant sous la forme d'au moins une première portion de cylindre 21 de révolution autour d'un deuxième axe de révolution 22 et de rayon R, au moins une première extrémité 25 de ce berceau étant ouverte, le berceau 20 comportant en outre une ouverture latérale 24 définie dans un plan parallèle au deuxième axe de révolution 22 et situé entre ce deuxième axe de révolution 22 et la première portion de cylindre 21, et des moyens pour solidariser ce berceau 20 avec l'embase 10 de façon que la première extrémité 25 du berceau soit située à proximité du plan de coupe 14 et que le deuxième axe de révolution 22 fasse, avec le plan de coupe 14, un angle non nul qui, de façon très avantageuse, sera un angle droit, comme illustré sur les figures.

Les moyens pour solidariser le berceau 20 avec l'embase 10 sont du domaine de l'homme du métier, par exemple constitués d'un boulonnage, soudage, vissage, etc.

Le dispositif de coupe de carottes selon l'invention comporte aussi au moins une pièce d'appui 30 et des moyens 40 pour déplacer la pièce d'appui entre deux positions P1, P2.

La première position P1 est celle dans laquelle la pièce d'appui est entièrement contenue dans le demi-espace 60 délimité par un plan 41 parallèle au plan de coupe 14 en passant par la première extrémité 25 du berceau 20 et contenant le berceau, et dans laquelle la distance minimale entre la pièce d'appui et le deuxième axe de révolution 22 est sensiblement égale à la valeur R.

La seconde position P2 est celle dans laquelle la pièce d'appui est entièrement contenue dans le même demi-espace 60, et dans laquelle la distance minimale entre la pièce d'appui et le deuxième axe de révolution est supérieure à la valeur R.

Cependant, dans un mode de réalisation particulièrement avantageux et préférentiel permettant d'obtenir un très bon maintien des carottes, la pièce d'appui 30 se présente sous la forme d'au moins une seconde portion de cylindre 31 de révolution autour d'un troisième axe de révolution 32 et de rayon R, au moins une première extrémité 35 de cette pièce d'appui étant ouverte, la pièce d'appui comportant en outre une ouverture latérale 34 définie dans un plan parallèle au troisième axe de révolution 32 et situé entre ce troisième axe de révolution et la seconde portion de cylindre 31.

Dans ce mode de réalisation, lorsque la pièce d'appui 30 est dans sa première position P1, la seconde portion de cylindre 31 est entièrement contenue dans le demi-espace 60 délimité par un plan 41 parallèle au plan de coupe 14 en passant par la première extrémité 25 du berceau 20 et contenant le berceau 20, les deuxième et troisième axes de révolution 22, 32 sont confondus, les plans des ouvertures latérales 24, 34 respectivement des première et seconde portions de cylindre 21, 31 sont sensiblement parallèles et la première extrémité 35 de la pièce d'appui 30 est tournée vers le plan de coupe 14.

Dans la seconde position P2, les deuxième et troisième axes de révolution 22, 32 ne sont pas confondus, la pièce d'appui reste constamment dans le demi-espace 60.

Selon une réalisation possible, les moyens 40 pour déplacer la pièce d'appui 30 entre les première et seconde positions P1, P2 telles que définies ci-dessus, comportent des moyens pour monter la pièce d'appui 30 en rotation par rapport à l'embase 10 autour d'un premier axe de rotation 42 perpendiculaire aux deuxième et troisième axes de révolution 22, 32, et des moyens 43 pour commander la pièce d'appui 30 en rotation R2 autour de ce premier axe de rotation 42 entre les première et seconde positions P1, P2.

De préférence, ces moyens 43 pour commander la pièce d'appui 30 en rotation autour du premier axe de rotation 42 entre les deux positions P1, P2 comportent essentiellement un manche de manipulation 44, des moyens pour monter ce manche de manipulation en rotation R1 par rapport à l'embase 10, de préférence dans un plan sensiblement perpendiculaire au premier axe de rotation 42, et des moyens 48 pour coupler ce manche de manipulation 44 et la pièce d'appui 30 de façon que, par une rotation R1 du manche de manipulation 44 dans un sens, figure 2, la pièce d'appui 30 soit animée d'un mouvement de rotation R2 autour du premier axe de rotation 42 dans le sens opposé.

Les moyens 48 pour coupler le manche de manipulation 44 et la pièce d'appui 30 sont constitués par une came 51 dont une première extrémité 52 est montée rotative en un premier point 53 sur l'embase 10 et dont la seconde extrémité 54 est montée rotative en un deuxième point 55 sur le manche de manipulation 44, une extrémité 46 du manche de manipulation 44 étant montée rotative en un troisième point 47 sur la pièce d'appui 30, ce troisième point n'étant pas situé sur le premier axe de rotation 42 défini ci-avant. Les moyens pour monter en rotation le manche de manipulation 44 et la came 51 respectivement aux points 47, 55 et 53 seront avantageusement choisis sous la forme d'axes de rotation, tous parallèles entre eux et au premier axe de rotation 42, bien qu'ils puissent être réalisés sous d'autres formes, par exemple sous la forme de rotules ou analogues.

Cette réalisation permet d'obtenir un dispositif en fonctionnement moins encombrant, d'amplifier la force exercée sur le manche de manipulation 44, et de bloquer automatiquement la rotation du manche de manipulation quand la pièce d'appui 30 est dans sa première position P1, sans que ce blocage soit irréversible.

Selon une réalisation préférentielle comme celle illustrée sur les figures 1 et 2, la lame de scie 12 est plane et circulaire, et les moyens 16 pour l'animer en mouvement de coupe dans le plan de coupe 14 sont constitués par un moteur 70, de préférence un moteur électrique, dont l'arbre de sortie 71 est solidaire du centre de la lame de scie 12, pour pouvoir l'entraîner en rotation et couper la carotte Ca comme explicité ci-après.

Comme mentionné précédemment, le dispositif comporte en outre des moyens pour déplacer la lame de scie 12 par rapport à l'embase 10 en translation dans le plan de coupe 14, pour assurer toute la coupe de la carotte Ca (ou des carottes). Ces moyens pour déplacer la lame de scie en translation par rapport à l'embase sont constitués, par exemple, d'une glissière 80 solidaire de l'embase 10 et qui a un chemin de glissement rectiligne parallèle au plan de coupe, et de moyens 82 pour monter le moteur 70 en translation sur la glissière 80 de façon que, lorsque le moteur se déplace par rapport à cette glissière, la lame de scie, tout en tournant, se déplace dans le plan de coupe et procède à la coupe de la carotte Ca, ou de plusieurs carottes placées les unes à côté des autres comme explicité ci-après.

Comme mentionné ci-dessus, le dispositif a été décrit de façon que l'angle que fait le deuxième axe de révolution 22 avec le plan de coupe 14 soit de façon très avantageuse égal à un angle droit, afin de pouvoir réaliser sans problèmes majeurs tous les tests auxquels les tronçons de carottes seront ou doivent être soumis.

Le dispositif a été décrit ci-dessus dans le cas où il comporte un berceau 20 et une pièce d'appui 30 associée à ce berceau, chacun comportant une portion de cylindre de révolution 21, 31. Cependant, comme dans le mode de réalisation illustré plus particulièrement sur la figure 1, le berceau 20 peut comporter une pluralité de premières portions de cylindre de révolution 21 dont les axes de révolution 22 sont tous parallèles entre eux et sensiblement situés dans un même premier plan, et la pièce d'appui 30 peut comporter une pluralité de secondes portions de cylindre de révolution 31 dont les axes de révolution 32 sont, eux aussi, tous parallèles entre eux et sensiblement situés dans un même second plan.

Dans ce cas, selon une réalisation préférentielle et avantageuse, les moyens pour monter en rotation la pièce d'appui 30 et la came 51 respectivement aux points 42 et 53 sont situés sur une patte 100 solidaire de l'embase 10, soit rapportée sur l'embase 10 soit d'une seule pièce avec celle-ci, figures 1 et 2. Cette patte 100 est alors d'une épaisseur parallèle à l'axe 42 qui est au plus égale à la différence entre la distance séparant deux axes de révolution 22 consécutifs et la valeur 2R, et elle est située sur l'embase 10 de façon que deux carottes de plus grande longueur que celle du berceau 20 soient aptes à passer de part et d'autre de cette patte 100.

En outre, la glissière 80 est agencée pour que son chemin de glissement soit parallèle au premier plan défini ci-dessus de façon que la coupe des carottes soit relativement identique et homogène pour toutes les carottes.

Pour un fonctionnement optimum du dispositif de coupe de carottes selon l'invention et éviter notamment des cassures au niveau des extrémités des tronçons quand la scie coupe ces carottes, il est tout à fait préférable que le dispositif comporte en outre, comme illustré sur les deux figures, une contre plaque 90 comportant au moins un orifice cylindrique 92 de révolution autour d'un quatrième axe de révolution 94 et de rayon R, cet orifice cylindrique débouchant, par une extrémité, sur une face 96 de la contre plaque 90, et des moyens pour solidariser la contre plaque avec l'embase 10 de façon que sa face 96 soit en regard de la première extrémité 25 du berceau, que le quatrième axe de révolution 94 soit confondu avec le deuxième axe de révolution 22 du berceau et que le plan de coupe 14 soit situé entre cette face 96 de la contre plaque 90 et la première extrémité 25 du berceau.

De cette façon, lors de sa coupe, chaque carotte est parfaitement maintenue, d'une part en étant pincée entre le berceau 20 et la pièce d'appui 30, et d'autre part en étant enfichée dans l'orifice 92 par son extrémité émergeant du berceau et qui doit subir la coupe.

Quand le dispositif comporte une pluralité de premières et secondes portions de cylindres de révolution comme décrit précédemment, la contre plaque 90 comporte une même pluralité d'orifices cylindriques 92 et les quatrièmes axes de révolution 94 sont respectivement colinéaires avec les deuxièmes axes de révolution 22 de la pluralité des premières portions de cylindre de révolution 21.

De façon avantageuse, pour ne pas limiter l'utilisation du dispositif à des carottes Ca ayant des longueurs initiales relativement petites, les première et seconde portions de cylindre 21, 31 sont ouvertes à leurs deux extrémités, de même que les orifices 92 de la contre plaque.

Le dispositif de coupe de carottes décrit ci-dessus peut par exemple s'utiliser de la façon suivante :

Les carottes Ca de rayon R dont on veut couper une extrémité sont respectivement placées dans les premières portions de cylindre 21 de rayon R du berceau 20, avec leurs extrémités à couper respectivement enfichées dans les orifices correspondants 92 de la contre plaque 90, les pièces d'appui 30 correspondantes étant dans leur seconde position P2 illustrée en traits interrompus sur la figure 2.

Ensuite, par actionnement du manche de manipulation 44 pour le faire tourner dans le sens dextrorsum selon la figure 2, les pièces d'appui 30 sont pivotées dans le sens senestrorsum jusqu'à ce qu'elles recouvrent les carottes Ca en épousant la partie de leur surface latérale émergeant du berceau 20. Les carottes à couper, le berceau 20 et la pièce d'appui 30 sont alors dans la position illustrée en traits continus sur les figures 1 et 2.

Quand les carottes sont ainsi maintenues, la lame de scie 12, par exemple spéciale béton quand les carottes sont en ce matériau, est animée d'un mouvement de rotation par le moteur 70, tout en lui imprimant un mouvement de translation le long de la glissière 80 au fur et à mesure que s'effectue la coupe des carottes rencontrées par la lame scie 12.

Avec ce dispositif qui est à l'évidence d'une structure très simple et donc peu onéreuses, du fait que l'extrémité des carottes qui doit être coupée est bien maintenue dans la contre plaque 90 et que la lame de scie 12 se déplace dans l'espace défini entre la face 96 de la contre plaque et l'extrémité ouverte 25 du berceau, qui peut être très étroit, on obtient une surface de coupe parfaitement plane, ainsi que très peu de déchets par cassure ou ébrèchements.

Pour obtenir une surface de coupe opposée afin de réaliser une éprouvette de test, bien connue en elle-même, il suffit, soit de translater chaque carotte suivant l'axe 22, soit de retourner chaque carotte, et de procéder à la coupe, de la même façon que pour la première face de coupe.

## Revendications

1. Dispositif pour couper au moins une extrémité de carottes (Ca) en un matériau relativement dur se présentant sous la forme d'un cylindre de révolution autour d'un premier axe de révolution (Ar) et de rayon R, pour réaliser des faces d'extrémités planes, comportant une embase (10), une lame de scie (12), des moyens (16) pour animer ladite lame de scie (12) en mouvement de coupe dans un plan de coupe (14), des moyens pour déplacer ladite lame de scie par rapport à ladite embase, en translation dans le plan de coupe (14), au moins un berceau (20) se présentant sous la forme d'au moins une première portion de cylindre (21) de révolution autour d'un deuxième axe de révolution (22) et de rayon R, au moins une première extrémité (25) du dit berceau étant ouverte, ledit berceau (20) comportant en outre une ouverture latérale (24) définie dans un plan parallèle au dit deuxième axe de révolution (22) et situé entre ce dit deuxième axe de révolution (22) et ladite première portion de cylindre (21), des moyens pour solidariser ledit berceau (20) avec ladite embase (10) de façon que ladite première extrémité (25) du dit berceau soit située à proximité du plan de coupe (14) et que le deuxième axe de révolution (22) fasse, avec le plan de coupe (14), un angle non nul, au moins une pièce d'appui (30), des moyens (40) pour déplacer ladite pièce d'appui (30) entre deux positions une première position (P1) dans laquelle la pièce d'appui (30) est entièrement contenue dans le demi-espace (60) délimité par un plan (41) parallèle au plan de coupe (14) en passant par la première extrémité (25) du berceau (20) et contenant ledit berceau, et dans laquelle la distance minimale entre la pièce d'appui et le deuxième axe de révolution (22) est sensiblement égale à la valeur R, et une seconde position (P2) dans laquelle la pièce d'appui (30) est entièrement contenue dans ledit demi-espace (60), et dans laquelle la distance minimale entre la pièce d'appui et le deuxième axe de révolution est supérieure à la valeur R, ladite au moins une pièce d'appui (30) se présentant sous la forme d'au moins une seconde portion de cylindre (31) de révolution autour d'un troisième axe de révolution (32) et de rayon R, au moins une première extrémité (35) de ladite pièce d'appui étant ouverte, ladite pièce d'appui comportant en outre une ouverture latérale (34) définie dans un plan parallèle au dit troisième axe de révolution (32) et situé entre ce dit troisième axe de révolution (32) et ladite seconde portion de cylindre (34), les moyens (40) pour déplacer ladite pièce d'appui (30) entre les deux dites positions (P1, P2) étant agencés de façon que dans la première position (P1), les deuxième et troisième axes de révolution (22, 32) soient confondus, que les plans des ouvertures latérales (24, 34) respectivement des première et seconde portions de cylindre (21, 31) soient sensiblement parallèles et que la première extrémité (35) de ladite pièce d'appui (30) soit tournée vers ledit plan de coupe (14), et que dans la seconde position (P2) lesdits deuxième et troisième axes de révolution (22, 32) ne soient pas confondus, ladite pièce d'appui restant dans ledit demi-espace (60) ***caractérisé par le fait que*** les moyens (40) pour déplacer ladite pièce d'appui (30) entre les première et seconde positions (P1, P2) comportent :
• des moyens pour monter ladite pièce d'appui (30) en rotation par rapport à ladite embase (10) autour d'un premier axe de rotation (42) perpendiculaire aux deuxième et troisième axes de révolution (22, 32), et
• des moyens (43) pour commander ladite pièce d'appui (30) en rotation autour de ce premier axe de rotation (42) entre les première et seconde positions (P1, P2).

2. Dispositif selon la revendication 1, **caractérisé par le fait que** les moyens (43) pour commander ladite pièce d'appui (30) en rotation autour du premier axe de rotation (42) entre les première et seconde positions (P1, P2) comportent :
• un manche de manipulation (44),
• des moyens pour monter ledit manche de manipulation en rotation par rapport à ladite embase (10), dans un plan sensiblement perpendiculaire au premier axe de rotation (42), et
• des moyens (48) pour coupler ledit manche de manipulation (44) et ladite pièce d'appui (30) de façon que, par une rotation (R1) du manche de manipulation (44) dans un sens, ladite pièce d'appui (30) soit animée d'un mouvement de rotation (R2) autour du premier axe de rotation (42) dans le sens opposé.

3. Dispositif selon la revendication 2, **caractérisé par le fait que** les moyens (48) pour coupler ledit manche de manipulation (44) et ladite pièce d'appui (30) sont constitués par une came (51) dont une première extrémité (52) est montée rotative en un premier point (53) sur ladite embase (10) et dont la seconde extrémité (54) est montée rotative en un deuxième point (55) sur le manche de manipulation (44), une extrémité (46) du manche de manipulation (44) étant montée rotative en un troisième point (47) sur ladite pièce d'appui (30), ce dit troisième point n'étant pas situé sur ledit premier axe de rotation (42).

4. Dispositif selon l'une des revendications précédentes, **caractérisé par le fait que**, ladite lame de scie (12) étant circulaire, les moyens (16) pour animer ladite lame de scie (12) en mouvement de coupe dans ledit plan de coupe (14) sont constitués par un moteur (70) dont l'arbre de sortie (71) est solidaire du centre de ladite lame de scie (12).

5. Dispositif selon la revendication 4, **caractérisé par le fait que** les moyens pour déplacer ladite lame de scie par rapport à ladite embase (10) en translation dans le plan de coupe (14) sont constitués par une glissière (80) solidaire de ladite embase (10) et ayant un chemin de glissement parallèle au plan de coupe, et des moyens (82) pour monter ledit moteur (70) en translation sur ladite glissière (80).

6. Dispositif selon l'une des revendications précédentes, **caractérisé par le fait que** l'angle que fait le deuxième axe de révolution (22) avec le plan de coupe (14) est un angle droit.

7. Dispositif selon l'une des revendications précédentes, quand elle dépend de la revendication 3, **caractérisé par le fait que** ledit au moins un berceau (20) comporte une pluralité de dites premières portions de cylindre de révolution (21) dont les axes de révolution (22) sont parallèles entre eux et sensiblement situés dans un même premier plan, et que ladite au moins une pièce d'appui (30) comporte une pluralité de dites secondes portions de cylindre de révolution (31) dont les axes de révolution (32) sont parallèles entre eux et sensiblement situés dans un même second plan, les premiers axes de rotation (42) étant colinéaires.

8. Dispositif selon la revendication 7, **caractérisé par le fait que** ledit premier plan est perpendiculaire au plan de coupe (14).

9. Dispositif selon l'une des revendications 7 ou 8, quand elle dépend de la revendication 5, **caractérisé par le fait que** ladite glissière est agencée pour que son chemin de glissement soit parallèle au dit premier plan.

10. Dispositif selon l'une des revendications précédentes, **caractérisé par le fait qu'**il comporte en outre :
• une contre plaque (90), ladite contre plaque comportant au moins un orifice cylindrique (92) de révolution autour d'un quatrième axe de révolution (94) et de rayon R, ledit orifice cylindrique débouchant, par une extrémité, sur une face (96) de ladite contre plaque (90), et
• des moyens pour solidariser ladite contre plaque avec ladite embase (10) de façon que sa dite face (96) soit en regard de la première extrémité (25) du berceau, que ledit quatrième axe de révolution (94) soit confondu avec le deuxième axe de révolution (22) et que ledit plan de coupe (14) soit situé entre cette dite face (96) de la contre plaque (90) et la première extrémité (25) du berceau.

11. Dispositif selon la revendication 10 et l'une des revendications 6 à 8, **caractérisé par le fait que** ladite contre plaque (90) comporte une pluralité d'orifices cylindriques (92) dont les quatrièmes axes de révolution (94) sont respectivement colinéaires avec les deuxièmes axes de révolution (22) de la pluralité de dites premières portions de cylindre de révolution (21).

## Patentansprüche

1. Vorrichtung zum Schneiden mindestens eines Endes von Bohrkemen (Ca) aus einem relativ harten Material, das in Form eines Rotationszylinders um eine erste Rotationsachse (Ar) und mit einem Radius R vorliegt, um ebene Endflächen herzustellen, mit einem Sockel (10), einem Sägeblatt (12), Mitteln (16) zum Antreiben des Sägeblatts (12) in einer Schneidbewegung in einer Schneidebene (14), Mitteln zum Verlagern des Sägeblatts in Bezug auf den Sockel in einer Translation in der Schneidebene (14), mindestens einem Wagen (20), der in Form mindestens eines ersten Rotationszylinderabschnitts (21) um eine zweite Rotationsachse (22) und mit einem Radius R vorliegt, wobei mindestens ein erstes Ende (25) des Wagens offen ist, wobei der Wagen (20) außerdem eine seitliche Öffnung (24) umfasst, die in einer zur zweiten Rotationsachse (22) parallelen Ebene definiert ist und zwischen dieser zweiten Rotationsachse (22) und dem ersten Zylinderabschnitt (21) liegt, Mitteln zum festen Verbinden des Wagens (20) mit dem Sockel (10), so dass das erste Ende (25) des Wagens in der Nähe der Schneidebene (14) liegt und dass die zweite Rotationsachse (22) mit der Schneidebene (14) einen von null verschiedenen Winkel einschließt, mindestens einem Stützstück (30), Mitteln (40) zum Verlagern des Stützstücks (30) zwischen zwei Positionen, einer ersten Position (P1), in der das Stützstück (30) vollständig in dem Halbraum (60) enthalten ist, der durch eine zur Schneidebene (14) parallele Ebene (41) begrenzt ist, die durch das erste Ende (25) des Wagens (20) verläuft, und den Wagen enthält, und in der der minimale Abstand zwischen dem Stützstück und der zweiten Rotationsachse (22) im Wesentlichen gleich dem Wert R ist, und einer zweiten Position (P2), in der das Stützstück (30) vollständig in dem Halbraum (60) enthalten ist und in der der minimale Abstand zwischen dem Stützstück und der zweiten Rotationsachse größer ist als der Wert R, wobei das mindestens eine Stützstück (30) in Form mindestens eines zweiten Rotationszylinderabschnitts (31) um eine dritte Rotationsachse (32) und mit einem Radius R vorliegt, wobei mindestens ein erstes Ende (35) des Stützstücks offen ist, wobei das Stützstück außerdem eine seitliche Öffnung (34) umfasst, die in einer zur dritten Rotationsachse (32) parallelen Ebene definiert ist und zwischen dieser dritten Rotationsachse (32) und dem zweiten Zylinderabschnitt (34) liegt, wobei die Mittel (40) zum Verlagern des Stützstücks (30) zwischen den zwei Positionen (P1, P2) in der Weise angeordnet sind, dass in der ersten Position (P1) die zweite und die dritte Rotationsachse (22, 32) zusammenfallen, dass die Ebenen der seitlichen Öffnungen (24, 34) des ersten bzw. des zweiten Zylinderabschnitts (21, 31) im Wesentlichen parallel sind und dass das erste Ende (35) des Stützstücks (30) zur Schneidebene (14) gerichtet ist, und dass in der zweiten Position (P2) die zweite und die dritte Rotationsachse (22, 32) nicht zusammenfallen, wobei das Stützstück in dem Halbraum (60) bleibt, **dadurch gekennzeichnet, dass** die Mittel (40) zum Verlagern des Stützstücks (30) zwischen der ersten und der zweiten Position (P1, P2) umfassen:
- Mittel zum Montieren des Stützstücks (30) zur Drehung in Bezug auf den Sockel (10) um eine erste Drehachse (42) senkrecht zur zweiten und zur dritten Rotationsachse (22, 32), und
- Mittel (43) zum Steuern des Stützstücks (30) zur Drehung um diese erste Drehachse (42) zwischen der ersten und der zweiten Position (P1, P2).

2. Vorrichtung nach Anspruch 1, **dadurch gekennzeichnet, dass** die Mittel (43) zum Steuern des Stützstücks (30) zur Drehung um die erste Drehachse (42) zwischen der ersten und der zweiten Position (P1, P2) umfassen:
- eine Betätigungshülse (44),
- Mittel zum Montieren der Betätigungshülse zur Drehung in Bezug auf den Sockel (10) in einer Ebene im Wesentlichen senkrecht zur ersten Drehachse (42), und
- Mittel (48) zum Koppeln der Betätigungshülse (44) und des Stützstücks (30) in der Weise, dass durch eine Drehung (R1) der Betätigungshülse (44) in einer Richtung das Stützstück (30) zu einer Drehbewegung (R2) um die erste Drehachse (42) in der entgegengesetzten Richtung angetrieben wird.

3. Vorrichtung nach Anspruch 2, **dadurch gekennzeichnet, dass** die Mittel (48) zum Koppeln der Betätigungshülse (44) und des Stützstücks (30) aus einem Nocken (51) gebildet sind, wovon ein erstes Ende (52) drehbar an einem ersten Punkt (53) an dem Sockel (10) montiert ist, und wovon das zweite Ende (54) drehbar an einem zweiten Punkt (55) an der Betätigungshülse (44) montiert ist, wobei ein Ende (46) der Betätigungshülse (44) drehbar an einem dritten Punkt (47) an dem Stützstück (30) montiert ist, wobei dieser dritte Punkte nicht auf der ersten Drehachse (42) liegt.

4. Vorrichtung nach einem der vorangehenden Ansprüche, **dadurch gekennzeichnet, dass**, wenn das Sägeblatt (12) kreisförmig ist, die Mittel (16) zum Antreiben des Sägeblatts (12) in einer Schneidbewegung in der Schneidebene (14) durch einen Motor (70) gebildet sind, dessen Ausgangswelle (71) mit dem Zentrum des Sägeblatts (12) fest verbunden ist.

5. Vorrichtung nach Anspruch 4, **dadurch gekennzeichnet, dass** die Mittel zum Verlagern des Sägeblatts in Bezug auf den Sockel (10) zur Translation in der Schneidebene (14) aus einer Gleitschiene (80), die mit dem Sockel (10) fest verbunden ist und einen Gleitpfad parallel zur Schneidebene aufweist, und Mitteln (82) zum Montieren des Motors (70) zur Translation an der Gleitschiene (80) gebildet sind.

6. Vorrichtung nach einem der vorangehenden Ansprüche, **dadurch gekennzeichnet, dass** der Winkel, den die zweite Rotationsachse (22) mit der Schneidebene (14) einschließt, ein rechter Winkel ist.

7. Vorrichtung nach einem der vorangehenden Ansprüche, wenn er von Anspruch 3 abhängt, **dadurch gekennzeichnet, dass** der mindestens eine Wagen (20) mehrere erste Rotationszylinderabschnitte (21) umfasst, deren Rotationsachsen (22) zueinander parallel sind und im Wesentlichen in einer gleichen ersten Ebene liegen, und dass das mindestens eine Stützstück (30) mehrere zweite Rotationszylinderabschnitte (31) umfasst, deren Rotationsachsen (32) zueinander parallel sind und im Wesentlichen in einer gleichen zweiten Ebene liegen, wobei die ersten Drehachsen (42) kollinear sind.

8. Vorrichtung nach Anspruch 7, **dadurch gekennzeichnet, dass** die erste Ebene zur Schneidebene (14) senkrecht ist.

9. Vorrichtung nach einem der Ansprüche 7 oder 8, wenn er von Anspruch 5 abhängt, **dadurch gekennzeichnet, dass** die Gleitschiene in der Weise angeordnet ist, dass ihr Gleitpfad zur ersten Ebene parallel ist.

10. Vorrichtung nach einem der vorangehenden Ansprüche, **dadurch gekennzeichnet, dass** sie außerdem umfasst:
- eine Gegenplatte (90), wobei die Gegenplatte mindestens eine zylindrische Rotationsöffnung (92) um eine vierte Rotationsachse (94) und mit einem Radius R umfasst, wobei die zylindrische Öffnung mit einem Ende an einer Fläche (96) der Gegenplatte (90) mündet, und
- Mittel zum festen Verbinden der Gegenplatte mit dem Sockel (10), so dass ihre Fläche (96) gegenüber dem ersten Ende (25) des Wagens liegt, dass die vierte Rotationsachse (94) mit der zweiten Rotationsachse (22) zusammenfällt und dass die Schneidebene (14) zwischen dieser Fläche (96) der Gegenplatte (90) und dem ersten Ende (25) des Wagens liegt.

11. Vorrichtung nach Anspruch 10 und einem der Ansprüche 6 bis 8, **dadurch gekennzeichnet, dass** die Gegenplatte (90) mehrere zylindrische Öffnungen (92) umfasst, deren vierte Rotationsachsen (94) jeweils mit den zweiten Rotationsachsen (22) der mehreren ersten Rotationszylinderabschnitte (21) kollinear sind.

## Claims

1. A device for cutting at least one end of a core (Ca) of relatively hard material in the form of a circular cylinder about a first axis of revolution (Ar) and of radius R, in order to make plane end faces, the device comprising a base (10), a saw blade (12), means (16) for driving said saw blade (12) in cutting motion in a cutting plane (14), means for moving said saw blade relative to said base in translation in the cutting plane (14), at least one cradle (20) in the form of at least a first portion (21) of a circular cylinder about a second axis of revolution (22) and of radius R, at least a first end (25) of said cradle being open, said cradle (20) also having a side opening (24) defined in a plane parallel to said second axis of revolution (22) and situated between said second axis of revolution (22) and said first cylinder portion (21), means for securing said cradle (20) with said base (10) in such a manner that said first end (25) of said cradle is situated in the proximity of the cutting plane (14) and the second axis of revolution (22) forms a non-zero angle with the cutting plane (14), at least one bearing part (30), means (40) for moving said bearing part (30) between two positions, namely a first position (P1) in which the bearing part (30) is entirely contained in the half-space (60) defined by a plane (41) parallel to the cutting plane (14) and passing via the first end (25) of the cradle and containing said cradle, and in which the minimum distance between the bearing part and the second axis of revolution (22) is substantially equal to the value R, and a second position (P2) in which the bearing part (30) is contained entirely in said half-space (60), and in which the minimum distance between the bearing part and the second axis of revolution is greater than the value R, said at least one bearing part (30) being in the form of at least one second circular cylinder portion (31) about a third axis of revolution (32) and of radius R, at least a first end (35) of said bearing part being open, said bearing part also including a side opening (34) defined in a plane parallel to said third axis of revolution (32) and situated between said third axis of revolution (32) and said second cylinder portion (34), the means (40) for moving said bearing part (30) between the two said positions (P1, P2) being arranged so that in the first position (P1) the second and third axes of revolution (22, 32) coincide, the planes of the side openings (24, 34) respectively of the first and second cylinder portions (21, 31) being substantially parallel, and the first end (35) of said bearing part (30) faces towards said cutting plane (14), and that in the second position (P2) said second and third axes of revolution (22, 32) do not coincide, said bearing part remaining in said half-space (60), the device being **characterized by** the fact that the means (40) for moving said bearing part (30) between the first and second positions (P1, P2) comprise:
• means for mounting said bearing part (30) to pivot relative to said base (10) about a first pivot axis (42) perpendicular to the second and third axes of revolution (22, 32); and
• means (43) for controlling pivoting of said bearing part (30) about said first pivot axis (42) between the first and second positions (P1, P2).

2. A device according to claim 1, **characterized by** the fact that the means (43) for controlling pivoting of said bearing part (30) about the first pivot axis (42) between the first and second positions (P1, P2) comprise:
• a control handle (44);
• means for mounting said control handle to pivot relative to said base (10) in a plane substantially perpendicular to the first pivot axis (42); and
• means (48) for coupling said control handle (44) and said bearing part (30) so that, by pivoting (R1) the control handle (44) in a first direction, said bearing part (30) is caused to pivot (R2) about the first pivot axis (42) in the opposite direction.

3. A device according to claim 2, **characterized by** the fact that the means (48) for coupling said control handle (44) and said bearing part (30) are constituted by a cam (51) having a first end (52) pivotally mounted at a first point (53) on said base (10) and having a second end (54) pivotally mounted at a second point (55) on the control handle (44), one end (46) of the control handle (44) being pivotally mounted at a third point (47) on said bearing part (30), said third point not being situated on said first pivot axis (42).

4. A device according to any preceding claim, **characterized by** the fact that said saw blade (12) is circular and the means (16) for driving said saw blade (12) in cutting motion in said cutting plane (14) are constituted by a motor (70) having its outlet shaft (71) secured to the center of said saw blade (12).

5. A device according to claim 4, **characterized by** the fact that the means for moving said saw blade relative to said base (10) in translation in the cutting plane (14) are constituted by a slideway (80) secured to said base (10) and having a sliding path parallel to the cutting plane, and means (82) for mounting said motor (70) to move in translation on said slideway (80).

6. A device according to any preceding claim, **characterized by** the fact that the angle between the second axis of revolution (22) and the cutting plane (14) is a right angle.

7. A device according to any preceding claim, when dependent on claim 3, **characterized by** the fact that said at least one cradle (20) has a plurality of said first circular cylinder portions (21) of axes of revolution (22) that are mutually parallel and that are situated substantially in a common first plane, and that said at least one bearing part (30) includes a plurality of said second circular cylinder portions (31) of axes of revolution (32) that are mutually parallel and situated substantially in a second common plane, the first pivot axes (42) being collinear.

8. A device according to claim 7, **characterized by** the fact that said first plane is perpendicular to the cutting plane (14).

9. A device according to claim 7 or claim 8 when dependent on claim 5, **characterized by** the fact that said slideway is arranged so that its sliding path is parallel to said first plane.

10. A device according to any preceding claim, **characterized by** the fact that it further comprises:
• a backing plate (90), said backing plate having at least one circularly cylindrical orifice (92) about a fourth axis of revolution (94) and of radius R, said cylindrical orifice opening out at one end in a face (96) of said backing plate (90); and
• means for securing said backing plate to said base (10) in such a manner that its said face (96) faces the first end (25) of the cradle, said fourth axis of revolution (94) coinciding with the second axis of revolution (22), and that said cutting plane (14) is situated between said face (96) of the backing plate (90) and the first end (25) of the cradle.

11. A device according to claim 10 and any one of claims 6 to 8, **characterized by** the fact that said backing plate (90) has a plurality of cylindrical orifices (92) with fourth axes of revolution (94) that are respectively collinear with the second axes of revolution (22) of the plurality of said first circular cylinder portions (21).
